# EUROPEAN PATENT SPECIFICATION

(11) **EP 4 199 444 B1**
(45) Date of publication and mention of the grant of the patent: **01.10.2025**
(21) Application number: 21855434.3
(22) Date of filing: 05.08.2021
(51) Int. Cl.: H04L 9/40, H04L 41/0853, H04L 41/12

(54) **CONNECTION CONTROL**
VERBINDUNGSSTEUERUNG
COMMANDE DE CONNEXION

(30) Priority: 11.08.2020 CN 202010802647
(43) Date of publication of application: 21.06.2023
(73) Proprietor: Hangzhou Hikvision Digital Technology Co., Ltd., Hangzhou, Zhejiang 310051 (CN)
(72) Inventor: WANG, Bin, Hangzhou Zhejiang 310051 (CN); LIU, Song, Hangzhou Zhejiang 310051 (CN); WAN, Li, Hangzhou Zhejiang 310051 (CN); HE, Chengrun, Hangzhou Zhejiang 310051 (CN); NI, Junwei, Hangzhou Zhejiang 310051 (CN); LIN, Kezhang, Hangzhou Zhejiang 310051 (CN); CHEN, Jiadong, Hangzhou Zhejiang 310051 (CN); WANG, Xing, Hangzhou Zhejiang 310051 (CN); WANG, Guoyun, Hangzhou Zhejiang 310051 (CN)
(74) Representative: Goddar, Heinz J.
(86) International application number: PCT/CN2021/110741
(87) International publication number: WO 2022/033381

(56) References cited:
- CN-A- 107 395 588
- CN-A- 108 521 399
- CN-A- 109 474 588
- CN-A- 109 981 344
- CN-A- 109 981 344
- CN-A- 110 677 435
- CN-A- 110 677 435
- CN-A- 110 830 494
- CN-A- 111 740 883
- US-A1- 2019 036 879
- US-A1- 2019 036 879

## Description

### TECHNICAL FIELD

The present disclosure relates to the data security technologies, and in particular to connection control methods, a connection control system, and an electronic device.

### BACKGROUND

At present, in some application scenarios, the terminal devices connected with a management center network in a terminal device network may be privately connected or spoofed. The terminal devices here may be front-end devices such as door access hosts, cameras, video monitoring terminal devices and the like. With a terminal device as a video monitoring terminal device, the management center network here may be a management center network for performing video monitoring and management.

Once the privately-connected or spoofed terminal devices are connected to the management center network, a large risk will be brought to the management center network, for example, the management devices in the management center network are damaged or the like.
CN110830494A discloses an IOT attack defense method and device, electronic equipment and a computer readable storage medium.
US20190036879A1 discloses port authentication control for access control and information security.
CN110677435A discloses a monitoring information safety control system and a monitoring management system.
CN109981344A discloses a scanning method and device and network forwarding equipment.

### SUMMARY

The invention is set out in the independent claims. Preferred embodiments are defined in the dependent claims.

### BRIEF DESCRIPTION OF THE DRAWINGS

The accompanying drawings herein incorporated in the specification to form a part of the specification illustrate the embodiments consistent with the present disclosure and serve together with the specification to explain the principle of the present disclosure.
FIG. 1 is a flowchart illustrating a method according to an embodiment of the present disclosure.
FIG. 2 is a schematic diagram illustrating an application example according to an embodiment of the present disclosure.
FIG. 3 is a schematic diagram illustrating terminal device information according to an embodiment of the present disclosure.
FIG. 4 is a schematic diagram of sending terminal device connection control information by a detection device to a connection control device according to an embodiment of the present disclosure.
FIG. 5 is a flowchart illustrating another method according to an embodiment of the present disclosure.
FIG. 6 is a schematic diagram of sending a forged packet according an embodiment of the present disclosure.
FIG. 7 is a schematic diagram illustrating another application example according an embodiment of the present disclosure.
FIG. 8 is a structural diagram illustrating a system according an embodiment of the present disclosure.
FIG. 9 is a structural diagram illustrating an apparatus according an embodiment of the present disclosure.
FIG. 10 is a structural diagram illustrating another apparatus according an embodiment of the present disclosure.
FIG. 11 is a structural diagram illustrating an electronic device according an embodiment of the present disclosure.

### DETAILED DESCRIPTION OF THE EMBODIMENTS

Exemplary embodiments will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present disclosure. Rather, they are merely examples of apparatuses and methods consistent with some aspects of the present disclosure as detailed in the appended claims.

The terms used in the present disclosure are for the purpose of describing particular examples only, and are not intended to limit the present disclosure. Terms defined by "a", "the" and "said" in their singular forms in the present disclosure and the appended claims are also intended to include plurality, unless clearly indicated otherwise in the context.

In order to help those skilled in the art to better understand the technical solutions of the embodiments of the present disclosure and make the above objects, features and advantages of the embodiments of the present disclosure clearer and more intelligible, the technical solutions of the embodiments of the present disclosure will be further detailed below in combination with accompanying drawings.

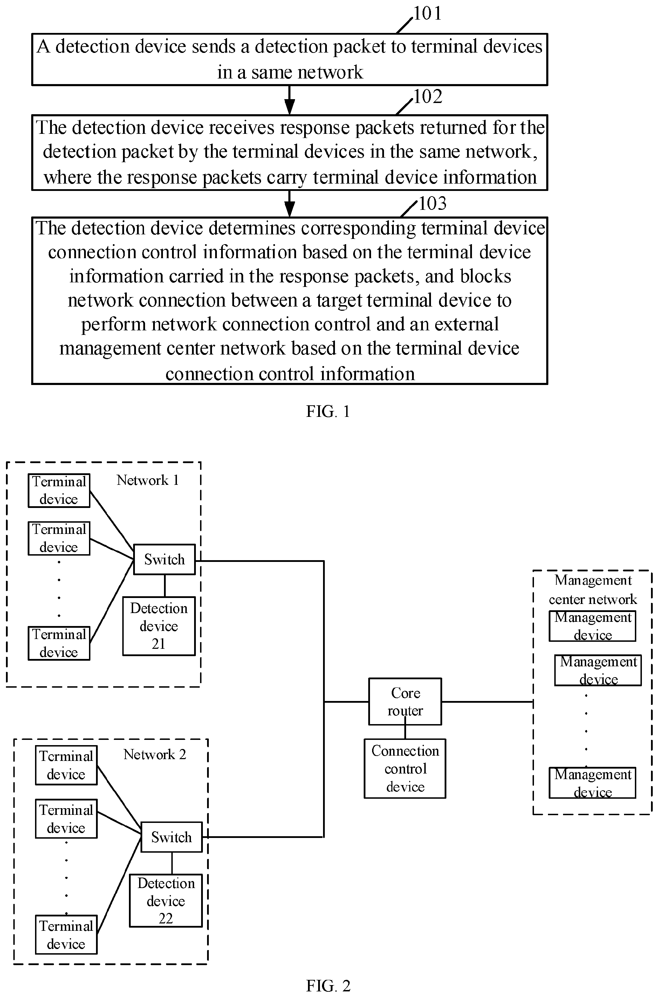

FIG. 1 is a flowchart illustrating a connection control method according to an embodiment of the present disclosure. The flow is applied to a detection device. Herein, the detection device is newly deployed for implementing the connection control method of the present embodiment. In some examples, in the present embodiment, the detection device may have multiple structures, for example, the detection device may be implemented by hardware module or by software module. When the detection device is implemented by hardware module, it is, for example, a separate hardware probe or the like. When the detection device is implemented by software module, it is, for example, a software detection module running on a PC, a software detection module integrated on a switch, or a software detection module integrated on a camera device. In this case, the detection device may be understood as a PC, a switch or a camera device having detection function or the like, which is not specifically limited in the present embodiment.

In an example, one detection device may be deployed in one network, and the deployed detection device may perform the method shown in FIG. 1 below. In another example, different networks may share one detection device. In this case, the detection device performs the method shown in FIG. 1 below for different networks (herein, it is defaulted that the detection device belongs to any network sharing the detection device). In some examples, the network herein may be obtained by dividing a terminal device network based on actual service requirements. The network herein may be equivalent to one Wireless Local Area Network (WLAN). For example, for one company, each subsidiary or each branch of the company may correspond to one network. FIG. 2 illustrates a schematic diagram of networks. In FIG. 2, a detection device is deployed for a network 1 and a network 2 respectively.

As shown in FIG. 1, the method may include the following steps.

At step 101, a detection device sends a detection packet to terminal devices in a same network.

As an embodiment, in step 101, the detection device periodically or regularly sends a detection packet to the terminal devices in the same network. Herein, the terminal devices may be a Network Video Recorder (VNR), a camera, a door access host, an alarming host and the like, which is not specifically limited in the present embodiment.

In the present embodiment, the detection device may send, in many ways, a detection packet to the terminal devices in the same network. As an embodiment, sending, by the detection device, a detection packet to the terminal devices in the same network may include: sending a multicast detection packet to the terminal devices in the same network. Herein, all terminal devices in the same network belong to a multicast group corresponding to the multicast detection packet. In an example, a destination IP address of the multicast detection packet is an IP address of the multicast group (the IP address of the multicast group may be one preset IP address, for example, the IP address may be one IP address in a reserved multicast IP address segment). When the destination IP address of the multicast detection packet is the IP address of the multicast group, it indicates that the multicast detection packet corresponds to the multicast group.

As another embodiment, sending, by the detection device, a detection packet to the terminal devices in the same network may include: sending a unicast detection packet to each terminal device in the same network. A destination IP address of the unicast detection packet is an IP address of the terminal device.

As another embodiment, sending, by the detection device, a detection packet to the terminal devices in the same network may include: sending a broadcast detection packet to each terminal device in the same network.

At step 102, the detection device receives response packets returned for the detection packet by the terminal devices in the same network, where the response packets carry terminal device information.

As described in step 101, after the detection device sends a multicast detection packet to the terminal devices in the same network, any terminal device in the same network returns a response packet upon receiving the multicast detection packet. Herein, the terminal device returns the response packet in a unicast way. Similarly, after the detection device sends a unicast detection packet to each terminal device in the same network, the terminal device receiving the unicast detection packet returns one response packet in a unicast way; or, after the detection device sends a broadcast detection packet to each terminal device in the same network, any terminal device receiving the broadcast detection packet may also return one response packet in a unicast way. As described in step 102, the detection device finally receives response packets returned for the detection packet by the terminal devices in the same network.

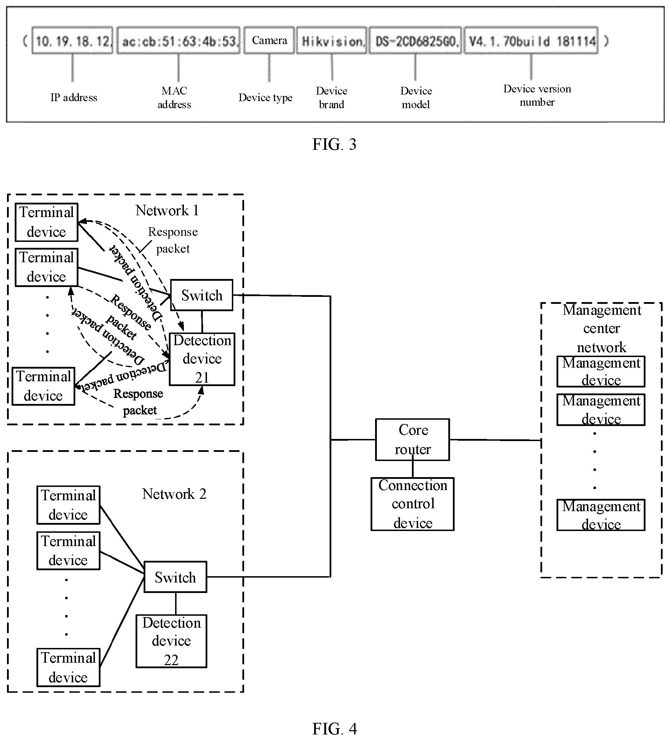

As described in step 102, the response packets returned by the terminal devices carry terminal device information. Herein, the terminal device information is used to represent a terminal device and may include parameters for describing a terminal device, which may, for example, include at least one of an IP address, an MAC address, a device type, a device brand, a device model and a device version number and the like. FIG. 3 illustrates one form of terminal device information (including an IP address, an MAC address, a device type, a device brand, a device model and a device version number).

At step 103, the detection device determines corresponding terminal device connection control information based on the terminal device information carried in the response packets, and blocks network connection between a target terminal device to perform network connection control and an external management center network based on the terminal device connection control information.

In the present embodiment, in step 103, the detection device determines the corresponding terminal device connection control information based on the terminal device information carried in the response packets. In practice, there may be many specific implementations which will be exemplified below.

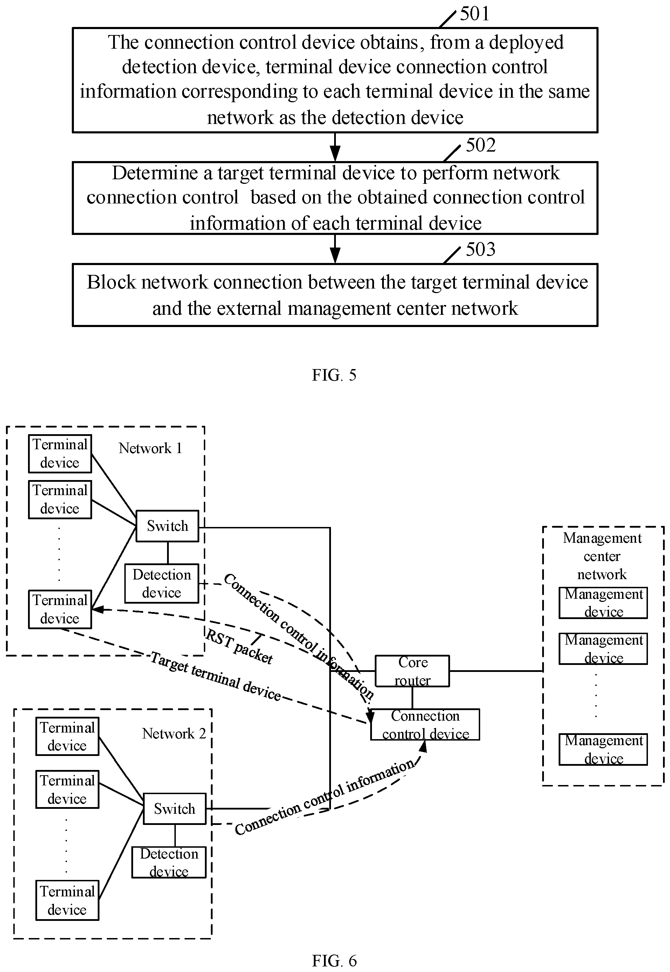

In the present embodiment, the detection device blocks network connection between the target terminal device to perform network connection control and the external management center network based on the terminal device connection control information in many implementations. As an implementation, blocking, by the detection device, network connection between the target terminal device to perform network connection control and the external management center network based on the terminal device connection control information includes: sending, by the detection device, the terminal device connection control information to a deployed connection control device to trigger the connection control device to determine a target terminal device to perform network connection control based on the terminal device connection control information and block network connection between the target terminal device and the external management center network. Herein, the connection control device is newly deployed for performing the connection control method provided by the present embodiment. The connection control device may be deployed in a network where the detection device is located or deployed between the network and the external management center network, which will be described below with an example. The connection control device may be, for example, a hardware device deployed on a switch or a router through a by-pass. The detection device is in communication with the connection control device. In order to guarantee the terminal device connection control information sent by the detection device is not leaked, the detection device may, before sending the terminal device connection control information to the deployed connection control device, encrypt the terminal device connection control information, and then send the encrypted terminal device connection control information to the deployed connection control device. For the specific encryption method, a current mature encryption algorithm may be adopted, which will not be specifically limited. When the connection control device receives the encrypted terminal device connection control information, a decryption method corresponding to the encryption method may be used to decrypt the encrypted terminal device connection control information to obtain the terminal device connection control information. Next, based on the terminal device connection control information, the connection control device determines a target terminal device to perform network connection control and blocks network connection between the target terminal device and the external management center network. For details, reference may be made to the flow shown in FIG. 5 below and no redundant descriptions are made herein.

In another embodiment, blocking, by the detection device, network connection between the target terminal device to perform network connection control and the external management center network based on the terminal device connection control information include: actively determining, by the detection device, a target terminal device to perform network connection control based on the terminal device connection control information and actively blocking network connection between the target terminal device to perform network connection control and the external management center network. In another example, the detection device actively determines the target terminal device to perform network connection control based on the terminal device connection control information in many implementations. Descriptions will be made below with an example and no redundant descriptions are made herein. Once the detection device actively determines a target terminal device to perform network connection control based on the terminal device connection control information, when the detection device actively blocks network connection between the target terminal device and the external management center network, the detection device may intercept and reject a data packet in performing communication between the target terminal device and the external management center network. In the present embodiment, in order to ensure the detection device intercepts the data packet in performing communication between the target terminal device and the external management center network, the detection device may be series-connected in the network and located on a communication path for performing communication between each terminal device in the network and the external management center network. In this way, the detection device may intercept and reject a data packet in performing communication between any target terminal device in the network and the external management center network so as to block network connection between the target terminal device and the external management center network.

Till now, the flow shown in FIG. 1 is completed.

As can be seen from the flow shown in FIG. 1, in the present embodiment, the detection device detects the connection control information of the terminal devices in the same network and blocks network connection between the target terminal device to perform network connection control and the external management center network based on the terminal device connection control information. In this way, connection control on the network connection between the target terminal device and the external management center network is achieved and the security of the external management center network is improved.

Furthermore, in the present embodiment, the detection device may determine a target terminal device to perform network connection control, for example, a privately-connected or spoofed terminal device and the like based on the response packets fed back by the terminal devices. Compared with the existing solution of analyzing a target terminal device (e.g. privately-connected or spoofed terminal device or the like) based on flow, the present solution can be implemented simply and an abnormal terminal device (i.e. the target terminal device, for example, the privately-connected or spoofed terminal device or the like) can be detected in time without performing flow analysis while the flow transmission is not affected.

With the example in which the detection device sends the terminal device connection control information to the deployed connection control device, the flow shown in FIG. 1 is illustrated in FIG. 2.

FIG. 2 is a schematic diagram illustrating an application example according to an embodiment of the present disclosure. As shown in FIG. 2, the terminal device network is divided into two networks, i.e. a network 1 and a network 2. A detection device is deployed for the network 1 and the network 2 respectively. The detection device deployed in the network 1 is denoted as 21 and the detection device deployed in the network 2 is denoted as 22.

In an example, the detection device 21 deployed in the network 1 and each terminal device deployed in the network 1 are connected to a switch of the network 1. Similarly, the detection device 22 deployed in the network 2 and each terminal device deployed in the network 2 are connected to a switch of the network 2. The terminal devices in the network 1 or 2 may be an NVR, a camera, a door access host and an alarming host and the like.

The network 1 is taken as an example, similar to the network 2.

The detection device 21 sends a multicast detection packet to each terminal device in the network 1 when a detection period is reached. Each terminal device in the network 1 belongs to a same multicast group, a multicast address of which is a destination address of the multicast data packet (namely, the multicast group corresponds to the multicast data packet). Based on this, when any terminal device in the network 1 receives the multicast detection packet, the terminal device returns a response packet to the detection device 21. The response packet carries terminal device information corresponding to the terminal device sending the response packet, for example, the terminal device information shown in FIG. 3.

When receiving a response packet from any terminal device within the present detection period, the detection device 21 determines the corresponding terminal device connection control information based on the terminal device information carried in the response packet and when the present detection period ends, sends each piece of terminal device connection control information determined within the present detection period to the deployed connection control device. With an example in which the connection control device is deployed between the network 1 and the external management center network, FIG. 4 illustrates a schematic diagram of sending the terminal device connection control information by the detection device 21 to the connection control device.

Finally, the detection device 21 in the network 1 sends the detected connection control information of the terminal devices in the same network to the connection control device. Similarly, the detection device 22 in the network 2 may also send the detected connection control information of the terminal devices in the same network to the connection control device. When the connection control device receives the terminal device connection control information, the connection control device may, based on the received terminal device connection control information, determine a target terminal device to perform network connection control, and block network connection between the target terminal device and the external management center network. For details, reference may be made to the flow shown in FIG. 5 and no redundant descriptions are made herein.

Till now, the descriptions of the embodiment shown in FIG. 2 are completed.

As an embodiment, in the above step 103 or the descriptions shown in FIG. 2, determining, by the detection device, the corresponding terminal device connection control information based on the terminal device information carried in the response packets may include step *a* below.

At step *a*, the detection device determines the received terminal device information carried in the response packets as the corresponding terminal device connection control information.

In an example, after determining the terminal device connection control information based on the step *a*, the detection device may send the terminal device connection control information to the deployed connection control device to trigger the connection control device to determine a target terminal device to perform network connection control based on the terminal device connection control information and block network connection between the target terminal device and the external management center network. Reference may be made to the flow shown in FIG. 5 in which the connection control device determines a target terminal device to perform network connection control based on the terminal device connection control information and blocks network connection between the target terminal device and the external management center network and no redundant descriptions are made herein.

In another example, after determining the terminal device connection control information based on the step *a*, the detection device may determine a target terminal device to perform network connection control based on the terminal device connection control information (i.e. the terminal device information carried in the response packets), and actively block network connection between the target terminal device and the external management center network. Herein, reference may be made to step b below in which a target terminal device to perform network connection control is determined based on the terminal device connection control information (i.e. the terminal device information carried in the response packets). For the details that the detection device actively blocks network connection between the target terminal device and the external management center network, reference may be made to the above description and no redundant descriptions are made herein.

As another embodiment, in the above step 103 or the descriptions shown in FIG. 2, determining, by the detection device, the corresponding terminal device connection control information based on the terminal device information carried in the response packets may include step *b* below.

At step *b*, based on the received terminal device information carried in the response packets, whether a terminal device corresponding to the terminal device information is a target terminal device to perform network connection control is determined; when it is determined that the terminal device corresponding to the terminal device information is a target terminal device to perform network connection control, indication information for indicating the terminal device is a target terminal device to perform network connection control is determined as the corresponding terminal device connection control information.

As an embodiment, in the above step *b*, based on the received terminal device information carried in the response packets, determining whether a terminal device corresponding to the terminal device information is the target terminal device to perform network connection control can be performed according to a configured connection control strategy.

For example, the connection control strategy requires that the terminal device information should include one parameter, which may be, for example, an IP address or an MAC address, or a device version number or the like. It should be noted that, if the connection control strategy requires the terminal device information should include one parameter, pre-configuration is to be performed for each terminal device such that the response packet returned by each terminal device at least carries the parameters required by the connection control strategy. In this case, based on the connection control strategy, a target terminal device to perform network connection control is determined, which specifically includes: when the terminal device information is not in a configured terminal device information white list, determining that the terminal device corresponding to the terminal device information is a target terminal device to perform network connection control. Herein, the connection control strategy and the terminal device information white list both are pre-configured based on actual requirements, which is not limited specifically in the present embodiment.

For another example, the connection control strategy requires that the terminal device information should include two or more parameters, one of which is an IP address of the terminal device. It should be noted that if the connection control strategy requires the terminal device information should include two or more parameters (one of them also includes an IP address), pre-configuration is to be performed for each terminal device such that the response packet returned by each terminal device at least carries the parameters required by the connection control strategy. In this case, a target terminal device to perform network connection control can be determined based on the connection control strategy in several implementations.

As an implementation, determining the target terminal device to perform network connection control as mentioned above may include: when the terminal device information carried in the response packet and stored reference terminal device information (corresponding to the terminal device information) are different in at least one parameter (described below with an example), determining the terminal device corresponding to the terminal device information is a target terminal device to perform network connection control. Herein, the reference terminal device information is, for example, previously-received terminal device information containing the IP address, for example, may be the device information (containing the IP address) of the terminal device submitted by the terminal device upon signing up to the detection device, or the device information (containing the IP address) of the terminal device sent by the detection device in the last detection period.

As another implementation, determining the target terminal device to perform network connection control as mentioned above may include: when the terminal device information carried in the response packet and the stored reference terminal device information are different in at least one parameter and the IP address is not in a configured IP white list, determining the terminal device corresponding to the terminal device information is the target terminal device to perform network connection control.

As mentioned above, determining the terminal device information carried in the response packet and the stored reference terminal device information are different in at least one parameter can be performed in several ways. For example, the connection control strategy requires that the terminal device information should include two parameters, which are an IP address and an MAC address respectively. Based on this, the terminal device information carried in the response packet and the stored reference terminal device information are different in at least one parameter, which means that the MAC address in the terminal device information carried in the response packet is different from the MAC address in the stored reference terminal device information. For another example, the connection control strategy requires that the terminal device information should include three parameters, which are an IP address, an MAC address and a device brand. Based on this, the terminal device information carried in the response packet and the stored reference terminal device information are different in at least one parameter, which means that the MAC address in the terminal device information carried in the response packet is different from the MAC address in the stored reference terminal device information, and/or, the device brand in the terminal device information carried in the response packet is different from the device brand in the stored reference terminal device information. For another example, the connection control strategy requires that the terminal device information should include four parameters, which are an IP address, an MAC address, a device brand and a device model. Based on this, the terminal device information carried in the response packet and the stored reference terminal device information are different in at least one parameter, which means that the MAC address in the terminal device information carried in the response packet is different from the MAC address in the stored reference terminal device information, and/or, the device brand in the terminal device information carried in the response packet is different from the device brand in the stored reference terminal device information, and/or, the device model in the terminal device information carried in the response packet is different from the device model in the stored reference terminal device information and so on, which will not be enumerated one by one.

As another implementation, determining the target terminal device to perform network connection control as mentioned above may include: when the reference terminal device information is not currently stored, or when the reference terminal device information is not currently stored and the IP address is not in the configured IP white list, determining the terminal device corresponding to the terminal device information is the target terminal device to perform network connection control. It should be noted that the IP white list mentioned above may be pre-configured based on actual requirements. No control is required for the network connection between a terminal device with the IP address being in the IP white list and the external management center network.

In an example, after determining the terminal device connection control information based on the step *b*, the detection device may send the terminal device connection control information to the deployed connection control device to trigger the connection control device to determine a target terminal device to perform network connection control based on the terminal device connection control information and block network connection between the target terminal device and the external management center network. For details, reference may be made to the flow shown in FIG. 5 and no redundant descriptions are made herein.

In another example, after determining the terminal device connection control information based on the step *b*, the detection device may directly determine a terminal device corresponding to the terminal device connection control information as the target terminal device to perform network connection control and actively block network connection between the target terminal device and the external management center network. For details, reference may be made to the above descriptions and no redundant descriptions are made herein.

The above descriptions are made to the connection control method of the present embodiment from the perspective of the detection device. The connection control method of the present embodiment will be described below from the perspective of the connection control device.

FIG. 5 is a flowchart illustrating another connection control method according to an embodiment of the present disclosure. The method is applied to a connection control device. In the present embodiment, the connection control device is newly deployed in a network to perform the connection control method provided by the present embodiment. In an example, the connection control device may be deployed in a network, and one connection control device is deployed in each network. The connection control device deployed in each network may perform the flow shown in FIG. 5. In another example, the connection control device may be deployed between the network and an external management center network to perform the method shown in FIG. 5.

As shown in FIG. 5, the method may include the following steps.

At step 501, the connection control device obtains, from a deployed detection device, terminal device connection control information corresponding to each terminal device in the same network as the detection device.

As an embodiment, in the flow shown in FIG. 1 or 2, when receiving response packets (in response to a detection packet from the detection device) returned by the terminal devices in the same network, the detection device determines corresponding terminal device connection control information based on terminal device information carried in the response packets, and sends the terminal device connection control information to the deployed connection control device. When the connection control device receives the terminal device connection control information from the detection device, it means that the step 501 of obtaining, by the connection control device, from the deployed detection device, the terminal device connection control information corresponding to each terminal device in the same network as the detection device is achieved.

As another embodiment, even if, as in the flow shown in FIG. 1 or 2, the detection device, after determining the corresponding terminal device connection control information, does not send the terminal device connection control information to the deployed connection control device, the connection control device actively obtains, from the detection device, the terminal device connection control information corresponding to each terminal device in the same network as the detection device. For example, the connection control device sends a request to the detection device to request the terminal device connection control information. When receiving the request, the detection device feeds the connection control information of each terminal device in the same network back to the connection control device. In this way, the step 501 of obtaining, by the connection control device, from the deployed detection device, the terminal device connection control information corresponding to each terminal device in the same network as the detection device is achieved.

At step 502, a target terminal device to perform network connection control is determined based on the obtained connection control information of each terminal device.

As mentioned in the above step *b*, the terminal device connection control information is indication information for indicating a terminal device is the terminal device to perform network connection control. Thus, determining the target terminal device to perform network connection control based on the obtained connection control information of each terminal device in step 502 may include: determining the terminal device indicated by the indication information as the target terminal device.

As mentioned in the above step *a*, the terminal device connection control information is the terminal device information. When the terminal device connection control information is the terminal device information, the step 502 of determining the target terminal device to perform network connection control based on the obtained connection control information of each terminal device can be performed based on the configured connection control strategy.

As an embodiment, if the connection control strategy requires the terminal device information should include one parameter, the parameter may be, for example, an IP address, or an MAC address or a device version number or the like. It is to be noted that if the connection control strategy requires the terminal device information should include one parameter, pre-configuration is to be performed for each terminal device such that the response packet returned by each terminal device at least carries the parameters required by the connection control strategy. In this case, the step 502 of determining the target terminal device to perform network connection control based on the obtained connection control information of each terminal device may include: when the terminal device information is not in the configured terminal device information white list, determining the terminal device corresponding to the terminal device information is the target terminal device.

As an embodiment, if the connection control strategy requires the terminal device information should include two or more parameters, one of which is an IP address of the terminal device. It should be noted that if the connection control strategy requires the terminal device information should include two or more parameters (one of them also includes an IP address), pre-configuration is to be performed for each terminal device such that the response packet returned by each terminal device at least carries the parameters required by the connection control strategy. In this case, the step 502 of determining the target terminal device to perform network connection control based on the obtained connection control information of each terminal device can be performed in several implementations.

As an implementation, the step 502 of determining the target terminal device to perform network connection control based on the obtained connection control information of each terminal device may include:

for each piece of terminal device information, when the reference terminal device information corresponding to the terminal device information is not stored, or, when the reference terminal device information is not stored and an IP address in the terminal device information is not in a configured IP white list, determining the terminal device corresponding to the terminal device information is the target terminal device; where the reference terminal device information includes the IP address. Herein, the reference terminal device information may be lately-obtained terminal device information containing the IP address; or terminal device information (containing the IP address) in a sign-up configuration or the like.

As another implementation, the step 502 of determining the target terminal device to perform network connection control based on the obtained connection control information of each terminal device may include:

for each piece of terminal device information, when the reference terminal device information corresponding to the terminal device information is stored, if the terminal device information and the reference terminal device information are different in at least one parameter, or, if the terminal device information and the reference terminal device information are different in at least one parameter and the IP address in the terminal device information is not in the configured IP white list, determining the terminal device corresponding to the terminal device information is the target terminal device.

In an example, determining the terminal device information and the reference terminal device information are different in at least one parameter can be performed in several ways. For example, the connection control strategy requires that the terminal device information should include two parameters, which are an IP address and an MAC address respectively. Based on this, the terminal device information and the stored reference terminal device information are different in at least one parameter, which means that the MAC address in the terminal device information is different from the MAC address in the stored reference terminal device information. For another example, the connection control strategy requires that the terminal device information should include three parameters, which are an IP address, an MAC address and a device brand. Based on this, the terminal device information and the stored reference terminal device information are different in at least one parameter, which means that the MAC address in the terminal device information is different from the MAC address in the stored reference terminal device information, and/or, the device brand in the terminal device information is different from the device brand in the stored reference terminal device information. For another example, the connection control strategy requires that the terminal device information should include four parameters, which are an IP address, an MAC address, a device brand and a device model. Based on this, the terminal device information and the stored reference terminal device information are different in at least one parameter, which means that the MAC address in the terminal device information is different from the MAC address in the stored reference terminal device information, and/or, the device brand in the terminal device information is different from the device brand in the stored reference terminal device information, and/or, the device model in the terminal device information is different from the device model in the stored reference terminal device information and so on, which will not be enumerated one by one.

Till now, the step 502 of determining the target terminal device to perform network connection control based on the obtained connection control information of each terminal device is completed. It is to be noted that the above description of determining the target terminal device to perform network connection control based on the obtained connection control information of each terminal device is only illustrative rather than limiting.

Once the target terminal device to perform network connection control is determined in the above step 502, it means that the target terminal device is abnormal, for example, the target terminal device is a privately-connected or spoofed device or the like. For this case, the following step 503 is performed.

At step 503, network connection between the target terminal device and the external management center network is blocked.

As an embodiment, if the connection control device is side-mounted on a core router. Herein, the core router is a router connected between the network and the external management center network, for example, a router on a backbone network located between the network and the external management center network. In this case, the step 503 of blocking network connection between the target terminal device and the external management center network includes: obtaining a data packet in performing communication between the target terminal device and the external management center network from the core router; based on the data packet, generating a forged packet for indicating unreachability of a destination end of the data packet and sending the forged packet to the core router so as to send the forged packet to a source end of the data packet through the core router, where the forged packet is used to interrupt network connection between the target terminal device and the external management center network. Herein, the data packet in performing communication between the target terminal device and the external management center network may be a data packet sent by the target terminal device to the external management center network; and/or, a data packet sent by the external management center network to the target terminal device. In an example, the data packet herein may be a protocol data packet, for example, a TCP data packet or a UDP data packet or the like. With the data packet as a TCP data packet, FIG. 6 illustrates the forged packet is a connection reset (RST) packet. Based on the TCP protocol, the sequence number of the RST packet is a sum of the sequence number carried by the data packet and 1.

It should be noted that the reason why the forged packet for indicating unreachability of the destination end of the data packet is generated based on the obtained data packet and sent to the core router so as to send the forged packet to the source end of the data packet through the core router is that: the connection control device is side-mounted on the core router and the core router is in communication with the source end and the destination end of the data packet; if the forged packet is not sent to the source end of the data packet through the core router, the core router may directly forward the data packet to the destination end of the data packet, failing to interrupt network connection between the target terminal device and the external management center network. Based on this, when the connection control device is side-mounted on the core router, the core router may mirror the data packet in performing communication between the target terminal device and the external management center network to the connection control device such that the connection control device generates a forged packet for indicating unreachability of the destination end of the data packet based on the obtained data packet and sends the forged packet to the core router, so as to send the forged packet to the source end of the data packet through the core router.

As another embodiment, the connection control device is series-connected between the network and the external management center network and is located on a communication path for performing communication between the each terminal device in the network and the external management center network. Based on this, the step 503 of blocking network connection between the target terminal device and the external management center network may include: intercepting and rejecting a data packet in performing communication between the target terminal device and the external management center network. The data packet in performing communication between the target terminal device and the external management center network may be a data packet sent by the target terminal device to the external management center network; and/or, a data packet sent by the external management center network to the target terminal device. In an example, the data packet may be a protocol data packet, for example, a TCP data packet or a UDP data packet or the like. Because the connection control device is located on the communication path for performing communication between the target terminal device and the external management center network, when the connection control device receives a data packet in performing communication between the target terminal device and the external management center network, the connection control device directly rejects the data packet so as to ensure the data packet will not reach the destination, thus blocking network connection between the target terminal device and the external management center network.

Till now, the flow shown in FIG. 5 is completed.

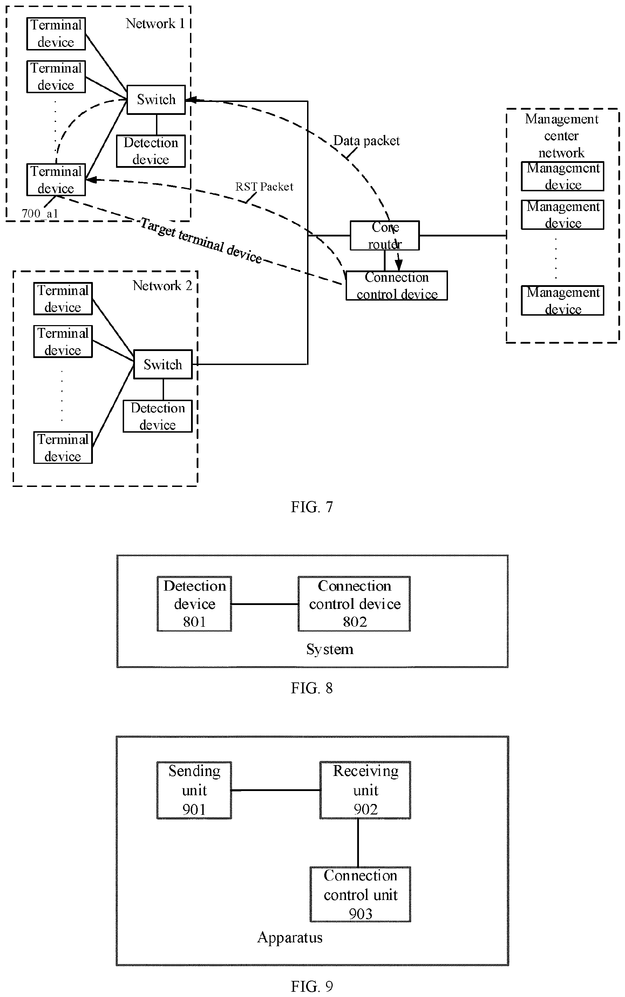

The flow shown in FIG. 5 will be described below by referring the embodiment shown in FIG. 7.

FIG. 7 is a schematic diagram illustrating an embodiment application according to the present disclosure. As shown in FIG. 7, the connection control device is side-mounted on the core router. It is assumed that the terminal device 700_a1 (IP address: 10.19.10.12 ) in the network 1 shown in FIG. 7 is determined as a target terminal device based on the steps 501 and 502. For example, the MAC address of the terminal device 700_a1 changes and is different from the MAC address in the previously-stored terminal device information containing the IP address 10.19.10.12. In this case, the terminal device 700_a1 may be determined as the target terminal device.

After the terminal device 700_a1 is determined as the target terminal device, the core router may monitor, in real time, a data packet, for example, a TCP data packet from the terminal device 700_a1 and monitor, in real time, a data packet, for example, a TCP data packet sent by the external network center network to the terminal device 700_a1. Once the core router detects a data packet, for example, a TCP data packet from the terminal device 700_a1, or detects a data packet, for example, a TCP data packet sent by the external network center network to the terminal device 700_a1, the core router mirrors the detected data packet, for example, the TCP data packet to the side-mounted connection control device.

For example, the core router detects a data packet, for example, a TCP data packet from the terminal device 700_a1. When the connection control device receives a data packet mirrored by the core router, the connection control device may forge a RST packet based on the received data packet. The sequence number of the RST packet is a sum of the sequence number of the received data packet and 1, which seemingly is equivalent to a data packet returned by the destination end of the data packet (external management center network). Next, the connection control device sends the RST packet to the core router which then sends the RST packet to the source end of the data packet (terminal device 700_a1) of the terminal device 700_a1. When the terminal device 700_a1 receives the RST packet, it is considered that the external management center network is unreachable. In this case, network connection between the terminal device 700_a1 and the external management center network is equivalently interrupted. Thus, the purpose of blocking network connection between the target terminal device and the external management center network is achieved.

Till now, the descriptions of the embodiment shown in FIG. 7 are completed.

The following descriptions are made to a system provided by an embodiment of the present disclosure.

FIG. 8 is a structural diagram illustrating a system according to an embodiment of the present disclosure. As shown in FIG. 8, the system may include a detection device 801 and a connection control device 802.

In an example, the detection device 801 is configured to perform the steps as performed in the method shown in FIG. 1; and,
the connection control device 802 is configured to perform the steps as performed in the method shown in FIG. 5.

In some examples, as shown in FIG. 9, an embodiment of the present disclosure provides a connection control apparatus applied to the detection device. As shown in FIG. 9, the apparatus may include:
a sending unit 901, configured to send a detection packet to terminal devices in a same network;
a receiving unit 902, configured to receive response packets returned for the detection packet by the terminal devices in the same network, wherein the response packets carry terminal device information;
a connection control unit 903, configured to, based on the terminal device information carried in the response packets, determine terminal device connection control information corresponding to the terminal devices, and based on the terminal device connection control information, block network connection between a target terminal device to perform network connection control and an external management center network.

As an embodiment, the sending unit sends the detection packet to the terminal devices in the same network by any one of the following manners:
sending a multicast detection packet to the terminal devices in the same network, where all terminal devices in the same network belong to a multicast group corresponding to the multicast detection packet;
sending a unicast detection packet to each terminal device in the same network; or,
sending a broadcast detection packet to each terminal device in the same network.

As an embodiment, blocking, by the connection control unit, network connection between the target terminal device to perform network connection control and the external management center network based on the terminal device connection control information may include:
sending the terminal device connection control information to a deployed connection control device to trigger the connection control device to determine the target terminal device to perform network connection control based on the terminal device connection control information and block network connection between the target terminal device and the external management center network.

As an embodiment, determining, by the connection control unit, the terminal device connection control information corresponding to the terminal devices based on the terminal device information carried in the response packets may include:
determining the received terminal device information carried in the response packets as the terminal device connection control information corresponding to the terminal devices; or,
based on the received terminal device information carried in the response packets, determining whether a terminal device corresponding to the terminal device information is the target terminal device to perform network connection control; when it is determined that the terminal device corresponding to the terminal device information is the target terminal device to perform network connection control, determining indication information for indicating the terminal device is the target terminal device to perform network connection control as the terminal device connection control information corresponding to the terminal device.

In some examples, the terminal device information includes one parameter; as an embodiment, based on the received terminal device information carried in the response packets, determining, by the connection control unit, whether the terminal device corresponding to the terminal device information is the target terminal device to perform network connection control may include: for each received response packet, when the terminal device information carried in the response packet is not in a configured terminal device information white list, determining the terminal device corresponding to the terminal device information carried in the response packet is the target terminal device to perform network connection control; or,
the terminal device information includes two or more parameters, one of which is an IP address of a terminal device; based on the received terminal device information carried in the response packets, determining whether the terminal device corresponding to the terminal device information is the target terminal device to perform network connection control may include:
for the terminal device information carried in each response packet,
when the detection device stores reference terminal device information corresponding to the terminal device information, if the terminal device information and the reference terminal device information are different in at least one parameter, or, if the terminal device information and the reference terminal device information are different in at least one parameter and the IP address in the terminal device information is not in a configured IP white list, determining the terminal device corresponding to the terminal device information is the target terminal device to perform network connection control; where the reference terminal device information includes the IP address; or,
when the detection device does not store the reference terminal device information, or, when the reference terminal device information is not stored and the IP address is not in the configured IP white list, determining the terminal device corresponding to the terminal device information is the target terminal device to perform network connection control.

As an embodiment, the detection device is series-connected on a communication path for performing communication between each terminal device in the network and the external management center network; based on this, as an embodiment, blocking, by the connection control unit, network connection between the target terminal device and the external management center network may include: intercepting and rejecting a data packet in performing communication between the target terminal device and the external management center network.

Till now, the structure descriptions of the apparatus shown in FIG. 9 are completed.

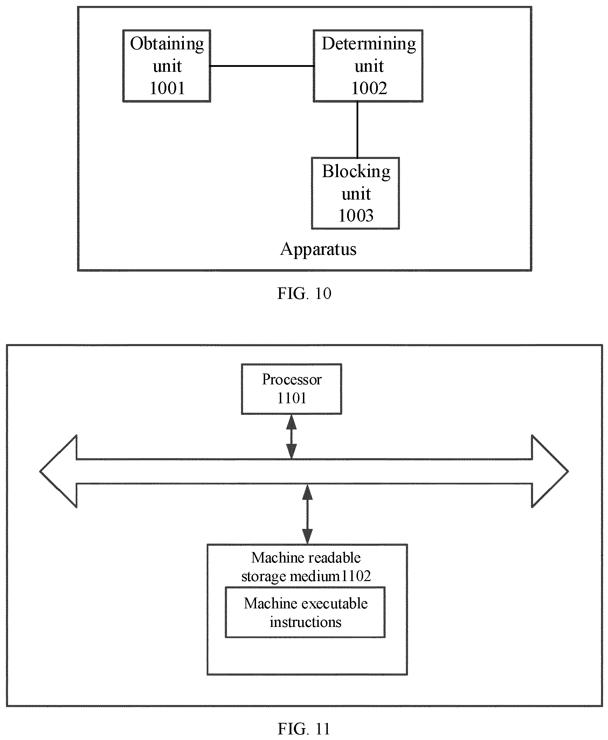

FIG. 10 is a structural diagram illustrating a connection control apparatus applied to a connection control device according to an embodiment of the present disclosure. As shown in FIG. 10, the apparatus includes:
an obtaining unit 1001, configured to obtain, from a deployed detection device, terminal device connection control information corresponding to each terminal device in a same network as the detection device;
a determining unit 1002, configured to, based on the obtained terminal device connection control information, determine a target terminal device to perform network connection control;
a blocking unit 1003, configured to block network connection between the target terminal device and an external management center network.

As an embodiment, the terminal device connection control information is indication information for indicating a terminal device is the target terminal device to perform network connection control; based on the obtained terminal device connection control information, determining, by the determining unit, the target terminal device to perform network connection control includes: determining the terminal device indicated by the indication information as the target terminal device; or,
the terminal device connection control information is terminal device information including one parameter; based on the obtained terminal device connection control information, determining, by the determining unit, the target terminal device to perform network connection control includes: when the terminal device information is not in a configured terminal device information white list, determining the terminal device corresponding to the terminal device information is the target terminal device; or,
the terminal device connection control information is terminal device information including two or more parameters, and one of the two or more parameters is an internet protocol (IP) address of a terminal device; based on the obtained terminal device connection control information, determining, by the determining unit, the target terminal device to perform network connection control includes:
for each piece of the terminal device information, when the connection control device does not store reference terminal device information corresponding to the terminal device information, or, when the reference terminal device information is not stored and the IP address in the terminal device information is not in a configured IP white list, determining the terminal device corresponding to the terminal device information is the target terminal device; the reference terminal device information includes the IP address; or,
for each piece of terminal device information, when the reference terminal device information corresponding to the terminal device information is stored, if the terminal device information and the reference terminal device information are different in at least one parameter, or, if the terminal device information and the reference terminal device information are different in at least one parameter and the IP address in the terminal device information is not in the configured IP white list, determining the terminal device corresponding to the terminal device information is the target terminal device.

As an embodiment, the connection control device is side-mounted on a core router which is a router connected between the network and the external management center network; blocking, by the blocking unit, network connection between the target terminal device and the external management center network includes: obtaining a data packet in performing communication between the target terminal device and the external management center network from the core router; based on the data packet, generating a forged packet for indicating unreachability of a destination end of the data packet and sending the forged packet to the core router so as to send the forged packet to a source end of the data packet through the core router, where the forged packet is used to interrupt network connection between the target terminal device and the external management center network; or,
the connection control device is series-connected on a communication path for performing communication between each terminal device in the network and the external management center network; blocking, by the blocking unit, network connection between the target terminal device and the external management center network includes: intercepting and rejecting a data packet in performing communication between the target terminal device and the external management center network.

Till now, the descriptions of the structural diagram of the apparatus shown in FIG. 10 are completed.

An embodiment of the present disclosure further provides a hardware structure of the apparatus shown in FIG. 9 or 10. FIG. 11 is a structural diagram illustrating an electronic device according to an embodiment of the present disclosure. As shown in FIG. 11, the hardware structure may include: a processor 1101 and a machine readable storage medium 1102. The readable storage medium stores machine executable instructions executable by the processor; and the processor is configured to execute the machine executable instructions to perform the methods disclosed by the above embodiments of the present disclosure.

Based on the application idea same as the above method, an embodiment of the present disclosure further provides a machine readable storage medium storing several computer instructions, which are executed by a processor to perform the methods disclosed in the above embodiments of the present disclosure.

The machine readable storage medium may be any of electronic, magnetic, optical or other physical storage devices and may contain or store information such as executable instructions, data and so on. For example, the machine readable storage medium may be Radom Access Memory (RAM), volatile or non-volatile memory, a flash memory, a storage drive (e.g. hard disk drive), a solid state harddisk, any type of storage disk (e.g., compact disk, Digital Video Disk (DVD)), or a similar storage medium, or a combination thereof.

The systems, apparatuses, modules or units described in the above examples may be specifically implemented by a computer chip or an entity or may be implemented by a product with a particular function. A typical implementing device may be a computer and the computer may be specifically a personal computer, a laptop computer, a cellular phone, a camera phone, a smart phone, a personal digital assistant, a media player, a navigation device, an email transceiver, a game console, a tablet computer, a wearable device, or a combination of any several devices of the above devices.

For ease of descriptions, the above apparatuses are divided into different units based on functionality for descriptions. Of course, the functions of different units may be implemented in a same or a plurality of hardware and/or software when practicing the present disclosure.

The persons skilled in the art should understand that the examples of the present disclosure may be provided as a method, a system, or a computer program product. Thus, entire hardware examples, entire software examples or examples combining software and hardware may be adopted in the present disclosure. Further, the present disclosure may be implemented in the form of a computer program product that is operated on one or more computer available storage media (including but not limited to magnetic disk memory, CD-ROM, and optical memory and so on) including computer available program codes.

The present disclosure is described by referring to flowcharts and/or block diagrams of a method, a device (a system) and a computer program product in the examples of the present disclosure. It is understood that each flowchart and/or block in the flowcharts and/or the block diagrams or a combination of a flow chart and/or a block of the flowcharts and/or the block diagrams may be implemented by computer program instructions. These computer program instructions may be provided to a general-purpose computer, a dedicated computer, an embedded processor, or a processor of another programmable data processing device to generate a machine so that the instructions executable by a computer or a processor of another programmable data processing device generate an apparatus for implementing functions designated in one or more flows of the flowcharts and/or one or more blocks of the block diagrams.

Further, these computer program instructions may also be stored in a computer readable memory that can direct a computer or another programmable data processing device to work in a particular manner so that the instructions stored in the computer readable memory generate a product including an instruction apparatus and the instruction apparatus can implement functions designated in one or more flows of the flowcharts and/or one or more blocks of the block diagrams.

The computer program instructions may also be loaded on a computer or another programmable data processing device, so that a series of operation steps can be executed on the computer or another programmable device to generate processing achieved by the computer, and thus instructions executable on the computer or another programmable device are provided for steps for realizing functions designated in one or more flows of the flowcharts and/or one or more blocks of the block diagrams.

The above descriptions are only some examples of the present disclosure, and are not used to limit the present disclosure. For those skilled in the art, the present disclosure may have various changes and modifications.

## Claims

1. A connection control method being performed by a connection control system comprising a detection device (801) and a connection control device (802), the method comprising:
sending (101), by the detection device, a detection packet to terminal devices in a same network periodically or regularly, wherein the detection packet is a multicast packet or a broadcast packet;
receiving (102), by the detection device, response packets returned for the detection packet by the terminal devices in the same network, wherein the response packets carry terminal device information; and
determining (103), by the detection device, terminal device connection control information corresponding to the terminal devices based on the terminal device information carried in the response packets, and blocking network connection between a target terminal device to perform network connection control and an external management center network based on the terminal device connection control information,
wherein blocking network connection between the target terminal device to perform network connection control and the external management center network based on the terminal device connection control information comprises:
sending the terminal device connection control information to the connection control device to trigger the connection control device to determine the target terminal device to perform network connection control based on the terminal device connection control information and block network connection between the target terminal device and the external management center network.

2. The method of claim 1, wherein the detection packet is sent to the terminal devices in the same network by any one of following manners:
sending a multicast detection packet to the terminal devices in the same network, wherein all terminal devices in the same network belong to a multicast group corresponding to the multicast detection packet;
or,
sending a broadcast detection packet to each terminal device in the same network.

3. The method of claim 1, wherein determining the terminal device connection control information corresponding to the terminal devices based on the terminal device information carried in the response packets comprises:
determining the received terminal device information carried in the response packets as the terminal device connection control information corresponding to the terminal devices; or,
based on the received terminal device information carried in the response packets, determining whether a terminal device corresponding to the terminal device information is the target terminal device to perform network connection control; when it is determined that the terminal device corresponding to the terminal device information is the target terminal device to perform network connection control, determining indication information for indicating the terminal device is the target terminal device to perform network connection control as the terminal device connection control information corresponding to the terminal device.

4. The method of claim 3, wherein
the terminal device information comprises one parameter; based on the received terminal device information carried in the response packets, determining whether the terminal device corresponding to the terminal device information is the target terminal device to perform network connection control comprises: for each received response packet, when the terminal device information carried in the response packet is not in a configured terminal device information white list, determining the terminal device corresponding to the terminal device information carried in the response packet is the target terminal device to perform network connection control; or,
the terminal device information comprises two or more parameters, wherein one of the two or more parameters is an internet protocol, IP, address of a terminal device; based on the received terminal device information carried in the response packets, determining whether the terminal device corresponding to the terminal device information is the target terminal device to perform network connection control comprises:
for the terminal device information carried in each response packet,
when the detection device stores reference terminal device information corresponding to the terminal device information, if the terminal device information and the reference terminal device information are different in at least one parameter, or, if the terminal device information and the reference terminal device information are different in at least one parameter and the IP address in the terminal device information is not in a configured IP white list, determining the terminal device corresponding to the terminal device information is the target terminal device to perform network connection control; wherein the reference terminal device information comprises the IP address; or,
when the detection device does not store the reference terminal device information, or, when the reference terminal device information is not stored and the IP address is not in the configured IP white list, determining the terminal device corresponding to the terminal device information is the target terminal device to perform network connection control.

5. The method of claim 4, wherein the detection device is series-connected in a communication path for performing communication between each terminal device in the network and the external management center network; blocking network connection between the target terminal device and the external management center network comprises: intercepting and rejecting a data packet in performing communication between the target terminal device and the external management center network.

6. The method of claim 1, wherein
the terminal device connection control information is indication information for indicating a terminal device is the target terminal device to perform network connection control; the connection control device determines the target terminal device to perform network connection control based on the terminal device connection control information , comprising: determining, by the connection control device, the terminal device indicated by the indication information as the target terminal device; or,
the terminal device connection control information is terminal device information comprising one parameter; the connection control device determines the target terminal device to perform network connection control based on the terminal device connection control information, comprising: when the terminal device information is not in a configured terminal device information white list, determining, by the connection control device, the terminal device corresponding to the terminal device information is the target terminal device; or,
the terminal device connection control information is terminal device information comprising two or more parameters, and one of the two or more parameters is an internet protocol, IP, address of a terminal device; the connection control device determines the target terminal device to perform network connection control based on the terminal device connection control information, comprising:
for each piece of the terminal device information, when the connection control device does not store reference terminal device information corresponding to the terminal device information, or, when the reference terminal device information is not stored and the IP address in the terminal device information is not in a configured IP white list, determining, by the connection control device, the terminal device corresponding to the terminal device information is the target terminal device; the reference terminal device information comprises the IP address; or,
for each piece of terminal device information, when the reference terminal device information corresponding to the terminal device information is stored, if the terminal device information and the reference terminal device information are different in at least one parameter, or, if the terminal device information and the reference terminal device information are different in at least one parameter and the IP address in the terminal device information is not in the configured IP white list, determining, by the connection control device, the terminal device corresponding to the terminal device information is the target terminal device.

7. The method of claim 1, wherein the connection control device is side-mounted on a core router which is a router connected between the network and the external management center network; blocking network connection between the target terminal device and the external management center network comprises: obtaining a data packet in performing communication between the target terminal device and the external management center network from the core router; based on the data packet, generating a forged packet for indicating unreachability of a destination end of the data packet and sending the forged packet to the core router so as to send the forged packet to a source end of the data packet through the core router, wherein the forged packet is used to interrupt network connection between the target terminal device and the external management center network; or,
the connection control device is series-connected on a communication path for performing communication between each terminal device in the network and the external management center network; blocking network connection between the target terminal device and the external management center network comprises: intercepting and rejecting a data packet in performing communication between the target terminal device and the external management center network.

8. A connection control system, configured to perform the method of any one of claims 1 to 7.

9. A machine readable storage medium (1102), **characterized by** storing machine readable instructions thereon, which are executed by a processor to perform the method of any one of claims 1 to 7.

10. A computer program product, wherein an instruction in the computer program product is loaded and executed by a processor in a computer device to perform the method of any one of claims 1 to7.

## Patentansprüche

1. Verbindungssteuerungsverfahren, das von einem Verbindungssteuerungssystem durchgeführt wird, das eine Detektionsvorrichtung (801) und eine Verbindungssteuerungsvorrichtung (802) umfasst, wobei das Verfahren folgende Schritte umfasst:
periodisches oder regelmäßiges Senden (101), durch die Detektionsvorrichtung, eines Detektionspakets an Endgeräte in einem gleichen Netzwerk, wobei das Detektionspaket ein Multicast-Paket oder ein Broadcast-Paket ist;
Empfangen (102), durch die Detektionsvorrichtung, von Antwortpaketen, die für das Detektionspaket von den Endgeräten in dem gleichen Netzwerk zurückgegeben werden, wobei die Antwortpakete Endgeräteinformationen tragen; und
Bestimmen (103), durch die Detektionsvorrichtung, von Endgeräteverbindungssteuerungsinformationen, die den Endgeräten entsprechen, basierend auf den Endgeräteinformationen, die in den Antwortpaketen getragen werden, und Blockieren einer Netzwerkverbindung zwischen einem Zielendgerät, das Netzwerkverbindungssteuerung durchzuführen soll, und einem externen Verwaltungszentrumsnetzwerk basierend auf den Endgeräteverbindungssteuerungsinformationen,
wobei das Blockieren einer Netzwerkverbindung zwischen dem Zielendgerät, das Netzwerkverbindungssteuerung durchzuführen soll, und dem externen Verwaltungszentrumsnetzwerk basierend auf den Endgeräteverbindungssteuerungsinformationen folgende Schritte umfasst: Senden der Endgeräteverbindungssteuerungsinformationen an die Verbindungssteuerungsvorrichtung, um zu bewirken, dass die Verbindungssteuerungsvorrichtung das Zielendgerät, das Netzwerkverbindungssteuerung durchzuführen soll, basierend auf den Endgeräteverbindungssteuerungsinformationen bestimmt und eine Netzwerkverbindung zwischen dem Zielendgerät und dem externen Verwaltungszentrumsnetzwerk blockiert.

2. Verfahren nach Anspruch 1, wobei das Detektionspaket auf eine der folgenden Weisen an die Endgeräte in dem gleichen Netzwerk gesendet wird:
Senden eines Multicast-Detektionspakets an die Endgeräte in dem gleichen Netzwerk, wobei alle Endgeräte in dem gleichen Netzwerk zu einer Multicast-Gruppe gehören, die dem Multicast-Detektionspaket entspricht;
oder
Senden eines Broadcast-Detektionspakets an jedes Endgerät in dem gleichen Netzwerk.

3. Verfahren nach Anspruch 1, wobei das Bestimmen der Endgeräteverbindungssteuerungsinformationen, die den Endgeräten entsprechen, basierend auf den Endgeräteinformationen, die in den Antwortpaketen getragen werden, folgende Schritte umfasst:
Bestimmen der empfangenen Endgeräteinformationen, die in den Antwortpaketen getragen werden, als die Endgeräteverbindungssteuerungsinformationen, die den Endgeräten entsprechen; oder
basierend auf den empfangenen Endgeräteinformationen, die in den Antwortpaketen getragen werden, Bestimmen, ob ein Endgerät, das den Endgeräteinformationen entspricht, das Zielendgerät ist, das Netzwerkverbindungssteuerung durchzuführen soll; wenn bestimmt wird, dass das Endgerät, das den Endgeräteinformationen entspricht, das Zielendgerät ist, das Netzwerkverbindungssteuerung durchzuführen soll, Bestimmen von Anzeigeinformationen zum Anzeigen, dass das Endgerät das Zielendgerät ist, das Netzwerkverbindungssteuerung durchzuführen soll, als die Endgeräteverbindungssteuerungsinformationen, die dem Endgerät entsprechen.

4. Verfahren nach Anspruch 3, wobei
die Endgeräteinformationen einen Parameter umfassen; basierend auf den empfangenen Endgeräteinformationen, die in den Antwortpaketen getragen werden, das Bestimmen, ob das Endgerät, das den Endgeräteinformationen entspricht, das Zielendgerät ist, das Netzwerkverbindungssteuerung durchzuführen soll, folgende Schritte umfasst: für jedes empfangene Antwortpaket, wenn die Endgeräteinformationen, die in dem Antwortpaket getragen werden, nicht in einer konfigurierten Whitelist von Endgeräteinformationen sind, Bestimmen, dass das Endgerät, das den Endgeräteinformationen entspricht, die in dem Antwortpaket getragen werden, das Zielendgerät ist, das Netzwerkverbindungssteuerung durchzuführen soll; oder
die Endgeräteinformationen zwei oder mehr Parameter umfassen, wobei einer der zwei oder mehr Parameter eine Internetprotokoll, IP, -Adresse eines Endgeräts ist; basierend auf den empfangenen Endgeräteinformationen, die in den Antwortpaketen getragen werden, das Bestimmen, ob das Endgerät, das den Endgeräteinformationen entspricht, das Zielendgerät ist, das Netzwerkverbindungssteuerung durchzuführen soll, folgende Schritte umfasst:
für die Endgeräteinformationen, die in jedem Antwortpaket getragen werden,
wenn die Detektionsvorrichtung Referenz-Endgeräteinformationen speichert, die den Endgeräteinformationen entsprechen, wenn sich die Endgeräteinformationen und die Referenz-Endgeräteinformationen in mindestens einem Parameter unterscheiden, oder wenn sich die Endgeräteinformationen und die Referenz-Endgeräteinformationen in mindestens einem Parameter unterscheiden und die IP-Adresse in den Endgeräteinformationen nicht in einer konfigurierten IP-Whitelist ist, Bestimmen, dass das Endgerät, das den Endgeräteinformationen entspricht, das Zielendgerät ist, das Netzwerkverbindungssteuerung durchzuführen soll; wobei die Referenz-Endgeräteinformationen die IP-Adresse umfassen; oder
wenn die Detektionsvorrichtung die Referenz-Endgeräteinformationen nicht speichert, oder wenn die Referenz-Endgeräteinformationen nicht gespeichert sind und die IP-Adresse nicht in der konfigurierten IP-Whitelist ist, Bestimmen, dass das Endgerät, das den Endgeräteinformationen entspricht, das Zielendgerät ist, das Netzwerkverbindungssteuerung durchzuführen soll.

5. Verfahren nach Anspruch 4, wobei die Detektionsvorrichtung in einem Kommunikationspfad zum Durchführen einer Kommunikation zwischen jedem Endgerät in dem Netzwerk und dem externen Verwaltungszentrumsnetzwerk in Reihe geschaltet ist; wobei das Blockieren einer Netzwerkverbindung zwischen dem Zielendgerät und dem externen Verwaltungszentrumsnetzwerk Folgendes umfasst: Abfangen und Zurückweisen eines Datenpakets beim Durchführen einer Kommunikation zwischen dem Zielendgerät und dem externen Verwaltungszentrumsnetzwerk.

6. Verfahren nach Anspruch 1, wobei
die Endgeräteverbindungssteuerungsinformationen Anzeigeinformationen zum Anzeigen sind, dass ein Endgerät das Zielendgerät ist, das Netzwerkverbindungssteuerung durchzuführen soll; wobei die Verbindungssteuerungsvorrichtung das Zielendgerät, das Netzwerkverbindungssteuerung durchführen soll, basierend auf den Endgeräteverbindungssteuerungsinformationen bestimmt, folgende Schritte umfasst: Bestimmen, durch die Verbindungssteuerungsvorrichtung, des Endgeräts, das durch
die Anzeigeinformationen angezeigt wird, als das Zielendgerät; oder
die Endgeräteverbindungssteuerungsinformationen Endgeräteinformationen sind, die einen Parameter umfassen; wobei die Verbindungssteuerungsvorrichtung das Zielendgerät, das Netzwerkverbindungssteuerung durchführen soll, basierend auf den Endgeräteverbindungssteuerungsinformationen bestimmt, folgende Schritte umfasst:
wenn die Endgeräteinformationen nicht in einer konfigurierten Whitelist von Endgeräteinformationen sind, Bestimmen, durch die Verbindungssteuerungsvorrichtung, dass das Endgerät, das den Endgeräteinformationen entspricht, das Zielendgerät ist; oder
die Endgeräteverbindungssteuerungsinformationen Endgeräteinformationen sind, die zwei oder mehr Parameter umfassen, und einer der zwei oder mehr Parameter eine Internetprotokoll, IP, -Adresse eines Endgeräts ist; wobei die Verbindungssteuerungsvorrichtung das Zielendgerät, das Netzwerkverbindungssteuerung durchzuführen soll, basierend auf den Endgeräteverbindungssteuerungsinformationen bestimmt, folgende Schritte umfasst:
für jedes Stück der Endgeräteinformationen, wenn die Verbindungssteuerungsvorrichtung keine Referenz-Endgeräteinformationen speichert, die den Endgeräteinformationen entsprechen, oder wenn die Referenz-Endgeräteinformationen nicht gespeichert sind und die IP-Adresse in den Endgeräteinformationen nicht in einer konfigurierten IP-Whitelist ist, Bestimmen, durch die Verbindungssteuerungsvorrichtung, dass das Endgerät, das den Endgeräteinformationen entspricht, das Zielendgerät ist; wobei die Referenz-Endgeräteinformationen die IP-Adresse umfassen; oder
für jedes Stück von Endgeräteinformationen, wenn die Referenz-Endgeräteinformationen, die den Endgeräteinformationen entsprechen, gespeichert sind, wenn die Endgeräteinformationen und die Referenz-Endgeräteinformationen in mindestens einem Parameter unterschiedlich sind, oder, wenn die Endgeräteinformationen und die Referenz-Endgeräteinformationen in mindestens einem Parameter unterschiedlich sind und die IP-Adresse in den Endgeräteinformationen nicht in der konfigurierten IP-Whitelist ist, Bestimmen, durch die Verbindungssteuerungsvorrichtung, dass das Endgerät, das den Endgeräteinformationen entspricht, das Zielendgerät ist.

7. Verfahren nach Anspruch 1, wobei die Verbindungssteuerungsvorrichtung auf einem Kern-Router seitlich montiert ist, der ein Router ist, der zwischen dem Netzwerk und dem externen Verwaltungszentrumsnetzwerk geschaltet ist; wobei das Blockieren einer Netzwerkverbindung zwischen dem Zielendgerät und dem externen Verwaltungszentrumsnetzwerk folgende Schritte umfasst: Erhalten eines Datenpakets beim Durchführen einer Kommunikation zwischen dem Zielendgerät und dem externen Verwaltungszentrumsnetzwerk von dem Kern-Router; basierend auf dem Datenpaket, Erzeugen eines gefälschten Pakets zum Anzeigen einer Nichterreichbarkeit eines Zielendes des Datenpakets und Senden des gefälschten Pakets an den Kern-Router, um das gefälschte Paket durch den Kern-Router an ein Quellende des Datenpakets zu senden, wobei das gefälschte Paket verwendet wird, um eine Netzwerkverbindung zwischen dem Zielendgerät und dem externen Verwaltungszentrumsnetzwerk zu unterbrechen; oder
die Verbindungssteuerungsvorrichtung in einem Kommunikationspfad zum Durchführen einer Kommunikation zwischen jedem Endgerät in dem Netzwerk und dem externen Verwaltungszentrumsnetzwerk in Reihe geschaltet ist; wobei das Blockieren einer Netzwerkverbindung zwischen dem Zielendgerät und dem externen Verwaltungszentrumsnetzwerk folgende Schritte umfasst: Abfangen und Zurückweisen eines Datenpakets beim Durchführen einer Kommunikation zwischen dem Zielendgerät und dem externen Verwaltungszentrumsnetzwerk.

8. Verbindungssteuerungssystem, das eingerichtet ist, das Verfahren nach einem der Ansprüche 1 bis 7 durchzuführen.

9. Maschinenlesbares Speichermedium (1102), **dadurch gekennzeichnet, dass** es maschinenlesbare Befehle darauf speichert, die durch einen Prozessor ausgeführt werden, um das Verfahren nach einem der Ansprüche 1 bis 7 durchzuführen.

10. Computerprogrammprodukt, wobei ein Befehl in dem Computerprogrammprodukt durch einen Prozessor in einer Computervorrichtung geladen und ausgeführt wird, um das Verfahren nach einem der Ansprüche 1 bis 7 durchzuführen.

## Revendications

1. Procédé de commande de connexion exécuté par un système de commande de connexion comprenant un dispositif de détection (801) et un dispositif de commande de connexion (802), le procédé comprenant :
l'envoi (101), par le dispositif de détection, d'un paquet de détection à des dispositifs terminaux dans un même réseau périodiquement ou régulièrement, dans lequel le paquet de détection est un paquet de multidiffusion ou un paquet de diffusion ;
la réception (102), par le dispositif de détection, de paquets de réponse renvoyés pour le paquet de détection par les dispositifs terminaux dans le même réseau, dans lequel les paquets de réponse transportent des informations de dispositif terminal ; et
la détermination (103), par le dispositif de détection, d'informations de commande de connexion de dispositif terminal correspondant aux dispositifs terminaux sur la base des informations de dispositif terminal transportées dans les paquets de réponse, et le blocage d'une connexion réseau entre un dispositif terminal cible pour exécuter une commande de connexion réseau et un réseau de centre de gestion externe sur la base des informations de commande de connexion de dispositif terminal,
dans lequel le blocage d'une connexion réseau entre le dispositif terminal cible pour exécuter une commande de connexion réseau et le réseau de centre de gestion externe sur la base des informations de commande de connexion de dispositif terminal comprend :
l'envoi des informations de commande de connexion de dispositif terminal au dispositif de commande de connexion pour déclencher le dispositif de commande de connexion pour déterminer le dispositif terminal cible pour exécuter une commande de connexion réseau sur la base des informations de commande de connexion de dispositif terminal et bloquer une connexion réseau entre le dispositif terminal cible et le réseau de centre de gestion externe.

2. Procédé selon la revendication 1, dans lequel le paquet de détection est envoyé aux dispositifs terminaux dans le même réseau par l'une quelconque des manières suivantes :
l'envoi d'un paquet de détection de multidiffusion aux dispositifs terminaux dans le même réseau, dans lequel tous les dispositifs terminaux dans le même réseau appartiennent à un groupe de multidiffusion correspondant au paquet de détection de multidiffusion ;
ou,
l'envoi d'un paquet de détection de diffusion à chaque dispositif terminal dans le même réseau.

3. Procédé selon la revendication 1, dans lequel la détermination des informations de commande de connexion de dispositif terminal correspondant aux dispositifs terminaux sur la base des informations de dispositif terminal transportées dans les paquets de réponse comprend :
la détermination des informations de dispositif terminal reçues transportées dans les paquets de réponse en tant qu'informations de commande de connexion de dispositif terminal correspondant aux dispositifs terminaux ; ou,
sur la base des informations de dispositif terminal reçues transportées dans les paquets de réponse, la détermination si un dispositif terminal correspondant aux informations de dispositif terminal est le dispositif terminal cible pour exécuter une commande de connexion réseau ; lorsqu'il est déterminé que le dispositif terminal correspondant aux informations de dispositif terminal est le dispositif terminal cible pour exécuter une commande de connexion réseau, la détermination d'informations d'indication pour indiquer que le dispositif terminal est le dispositif terminal cible pour exécuter une commande de connexion réseau en tant qu'informations de commande de connexion de dispositif terminal correspondant au dispositif terminal.

4. Procédé selon la revendication 3, dans lequel :
les informations du dispositif terminal comprennent un paramètre ; sur la base des informations de dispositif terminal reçues transportées dans les paquets de réponse, la détermination si le dispositif terminal correspondant aux informations de dispositif terminal est le dispositif terminal cible pour exécuter une commande de connexion réseau comprend : pour chaque paquet de réponse reçu, lorsque les informations de dispositif terminal transportées dans le paquet de réponse ne sont pas dans une liste blanche d'informations de dispositif terminal configurée, la détermination que le dispositif terminal correspondant aux informations de dispositif terminal transportées dans le paquet de réponse est le dispositif terminal cible pour exécuter une commande de connexion réseau ; ou,
les informations du dispositif terminal comprennent deux paramètres ou plus, dans lequel l'un des deux paramètres ou plus est une adresse de protocole Internet, IP, d'un dispositif terminal ; sur la base des informations de dispositif terminal reçues transportées dans les paquets de réponse, la détermination si le dispositif terminal correspondant aux informations de dispositif terminal est le dispositif terminal cible pour exécuter une commande de connexion réseau comprend :
pour les informations de dispositif terminal transportées dans chaque paquet de réponse,
lorsque le dispositif de détection stocke des informations de dispositif terminal de référence correspondant aux informations de dispositif terminal, si les informations de dispositif terminal et les informations de dispositif terminal de référence sont différentes dans au moins un paramètre, ou, si les informations de dispositif terminal et les informations de dispositif terminal de référence sont différentes dans au moins un paramètre et l'adresse IP dans les informations de dispositif terminal n'est pas dans une liste blanche d'IP configurée, la détermination que le dispositif terminal correspondant aux informations de dispositif terminal est le dispositif terminal cible pour exécuter une commande de connexion réseau ; dans lequel les informations de dispositif terminal de référence comprennent l'adresse IP ; ou,
lorsque le dispositif de détection ne stocke pas les informations de dispositif terminal de référence, ou, lorsque les informations de dispositif terminal de référence ne sont pas stockées et l'adresse IP n'est pas dans la liste blanche d'IP configurée, la détermination que le dispositif terminal correspondant aux informations de dispositif terminal est le dispositif terminal cible pour exécuter une commande de connexion réseau.

5. Procédé selon la revendication 4, dans lequel le dispositif de détection est connecté en série dans un chemin de communication pour exécuter une communication entre chaque dispositif terminal dans le réseau et le réseau de centre de gestion externe ; le blocage d'une connexion réseau entre le dispositif terminal cible et le réseau de centre de gestion externe comprend : l'interception et le rejet d'un paquet de données lors de l'exécution d'une communication entre le dispositif terminal cible et le réseau de centre de gestion externe.

6. Procédé selon la revendication 1, dans lequel
les informations de commande de connexion de dispositif terminal sont des informations d'indication pour indiquer qu'un dispositif terminal est le dispositif terminal cible pour exécuter une commande de connexion réseau ; le dispositif de commande de connexion détermine le dispositif terminal cible pour exécuter une commande de connexion réseau sur la base des informations de commande de connexion de dispositif terminal, comprenant : la détermination, par le dispositif de commande de connexion, du dispositif terminal indiqué par les informations d'indication en tant que dispositif terminal cible ; ou,
les informations de commande de connexion de dispositif terminal sont des informations de dispositif terminal comprenant un paramètre ; le dispositif de commande de connexion détermine le dispositif terminal cible pour exécuter une commande de connexion réseau sur la base des informations de commande de connexion de dispositif terminal, comprenant : lorsque les informations de dispositif terminal ne sont pas dans une liste blanche d'informations de dispositif terminal configurée, la détermination, par le dispositif de commande de connexion, que le dispositif terminal correspondant aux informations de dispositif terminal est le dispositif terminal cible ; ou,
les informations de commande de connexion de dispositif terminal sont des informations de dispositif terminal comprenant deux paramètres ou plus, et l'un des deux paramètres ou plus est une adresse de protocole Internet, IP, d'un dispositif terminal ; le dispositif de commande de connexion détermine le dispositif terminal cible pour exécuter une commande de connexion réseau sur la base des informations de commande de connexion de dispositif terminal, comprenant :
pour chaque élément des informations de dispositif terminal, lorsque le dispositif de commande de connexion ne stocke pas d'informations de dispositif terminal de référence correspondant aux informations de dispositif terminal, ou, lorsque les informations de dispositif terminal de référence ne sont pas stockées et l'adresse IP dans les informations de dispositif terminal n'est pas dans une liste blanche d'IP configurée, la détermination, par le dispositif de commande de connexion, que le dispositif terminal correspondant aux informations de dispositif terminal est le dispositif terminal cible ; les informations de dispositif terminal de référence comprennent l'adresse IP ; ou,
pour chaque élément d'informations de dispositif terminal, lorsque les informations de dispositif terminal de référence correspondant aux informations de dispositif terminal sont stockées, si les informations de dispositif terminal et les informations de dispositif terminal de référence sont différentes dans au moins un paramètre, ou, si les informations de dispositif terminal et les informations de dispositif terminal de référence sont différentes dans au moins un paramètre et l'adresse IP dans les informations de dispositif terminal n'est pas dans la liste blanche d'IP configurée, la détermination, par le dispositif de commande de connexion, que le dispositif terminal correspondant aux informations de dispositif terminal est le dispositif terminal cible.

7. Procédé selon la revendication 1, dans lequel le dispositif de commande de connexion est monté en parallèle sur un routeur central qui est un routeur connecté entre le réseau et le réseau de centre de gestion externe ; le blocage d'une connexion réseau entre le dispositif terminal cible et le réseau de centre de gestion externe comprend :
l'obtention d'un paquet de données lors de l'exécution d'une communication entre le dispositif terminal cible et le réseau de centre de gestion externe à partir du routeur central ; sur la base du paquet de données, la génération d'un paquet falsifié pour indiquer l'inaccessibilité d'une extrémité de destination du paquet de données et l'envoi du paquet falsifié au routeur central de manière à envoyer le paquet falsifié à une extrémité source du paquet de données par l'intermédiaire du routeur central, dans lequel le paquet falsifié est utilisé pour interrompre une connexion réseau entre le dispositif terminal cible et le réseau de centre de gestion externe ; ou,
le dispositif de commande de connexion est connecté en série sur un chemin de communication pour exécuter une communication entre chaque dispositif terminal dans le réseau et le réseau de centre de gestion externe ; le blocage d'une connexion réseau entre le dispositif terminal cible et le réseau de centre de gestion externe comprend : l'interception et le rejet d'un paquet de données lors de l'exécution d'une communication entre le dispositif terminal cible et le réseau de centre de gestion externe.

8. Système de commande de connexion, configuré pour exécuter le procédé selon l'une quelconque des revendications 1 à 7.

9. Support de stockage lisible par machine (1102), **caractérisé par** le stockage d'instructions lisibles par machine sur celui-ci, qui sont exécutées par un processeur pour exécuter le procédé selon l'une quelconque des revendications 1 à 7.

10. Produit de programme informatique, dans lequel une instruction dans le produit de programme informatique est chargée et exécutée par un processeur dans un dispositif informatique pour exécuter le procédé selon l'une quelconque des revendications 1 à 7.
